# EUROPEAN PATENT APPLICATION

(11) **EP 1 903 286 A1**
(43) Date of publication of application: **26.03.2008**
(21) Application number: 06731651.3
(22) Date of filing: 12.04.2006
(51) Int. Cl.: F24F 7/08

(54) **HEAT EXCHANGER**

(30) Priority: 14.06.2005 JP 2005173385
(71) Applicant: MATSUSHITA ELECTRIC INDUSTRIAL CO., LTD., Osaka 571-8501 (JP)
(72) Inventor: Hashimoto Toshihiko C/O Matsushita Electric Industrial Co. Intellectual Property Rights, Chuo-ku, Osaka-shi, Osaka 540-6207 (JP); ORITO, Shinobu C/O Matsushita Electric Industrial Co. Intellectual Property Rights, Chuo-ku, Osaka-shi, Osaka 540-6207 (JP); YASUI, Nobuyuki C/O Matsushita Electric Industrial Co., Intellectual Property Rights, Chuo-ku, Osaka-shi, Osaka 540-6207 (JP)
(74) Representative: Schwabe - Sandmair - Marx
(86) International application number: PCT/JP2006/307704
(87) International publication number: WO 2006/134716

(57) **Abstract**

A heat exchanger of small size and thin type is provided. It includes a machine body (1), an indoor suction port (3) for sucking indoor air (2), an indoor diffuser (4), an outdoor suction port (7) for sucking in outdoor air (6), an outdoor diffuser (8), a motor (11) provided inside the machine body (1), an exhaust blade (9) and an intake blade (10) disposed at the motor (11), an exhaust fan casing (12) provided around the exhaust blade (9), an intake fan casing (13) provided around the intake blade (10), and a plurality of heat exchange elements (16) disposed around the exhaust fan casing (12) and intake fan casing (13).

## Description

### TECHNICAL FIELD

The present invention relates to a heat exchanger for ventilating a room by heat exchange of indoor air and outdoor air by blowing with a fan motor and using a heat exchange element, and more particularly to a technology of realizing a compact design of heat exchanger and reducing the resistance of draft path.

### BACKGROUND ART

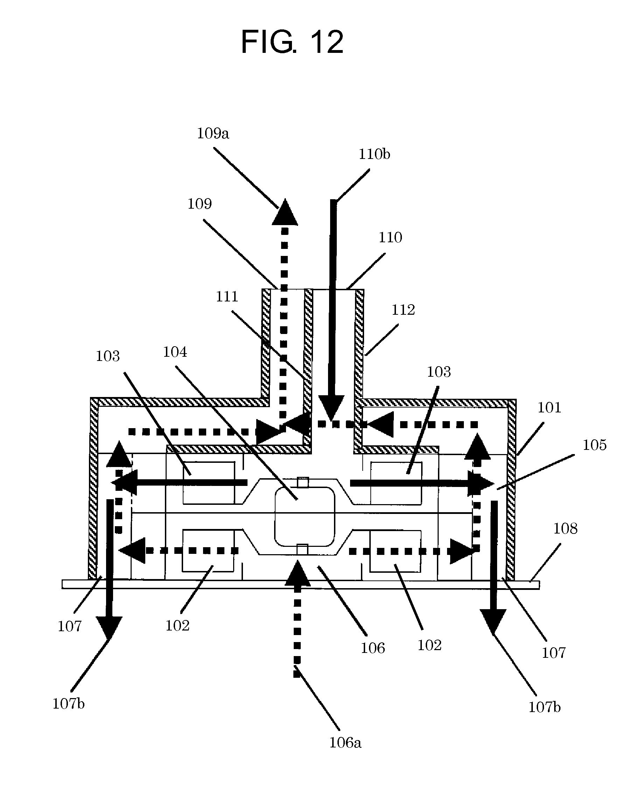

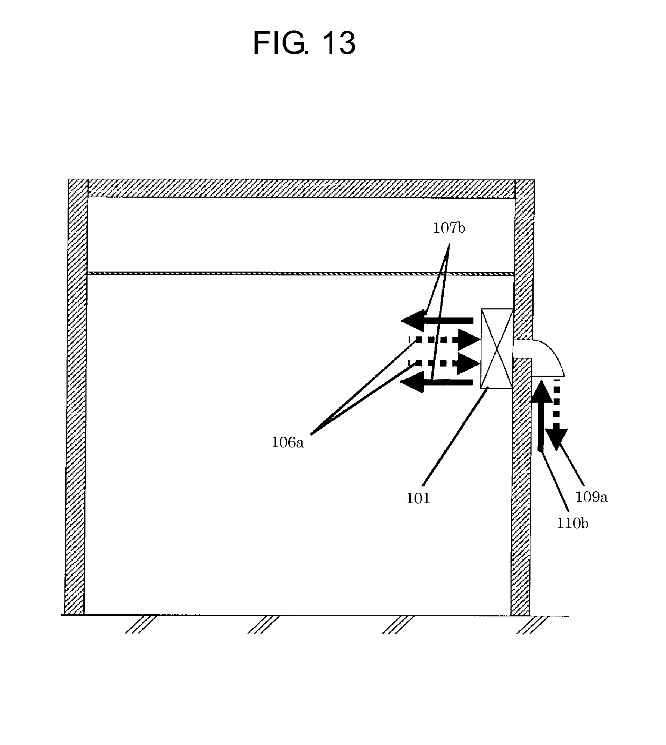

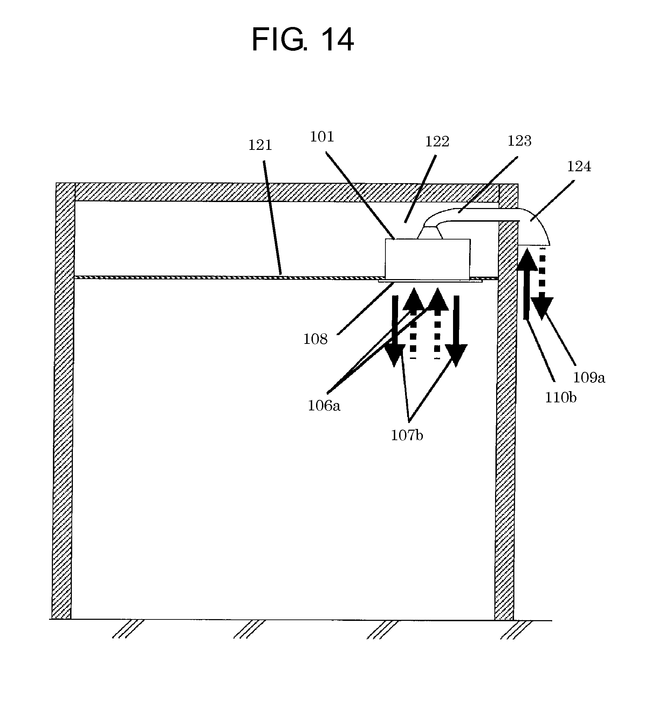

Fig. 12 to Fig. 14 show a first example of a conventional heat exchanger. Fig. 12 is a front sectional view, Fig. 13 is an installation drawing when mounting on a wall, and Fig. 14 is an installation drawing when mounting on a ceiling.

Main body 101 mainly includes exhaust blade 102, intake blade 103, motor 104 for rotating them, and a plurality of heat exchange elements 105. The indoor side of main body 101 is provided with louver 108 having indoor side suction port 106 for sucking the indoor air, and indoor side discharge port 107 for blowing out air in the room. The outdoor side is provided with outdoor side discharge port 109 for blowing out air into the room, and outdoor side suction port 110 for sucking air from outdoor.

In the central part of main body 101, exhaust blade 102 is provided in the upper part of indoor side suction port 106, and motor 104 for rotating it is coupled, and intake blade 103 is coupled to the opposite side of motor 104 coupling exhaust blade 102. On the outer periphery of exhaust blade 102 and intake blade 103, a plurality of heat exchange elements 105 alternately forming mutually independent passages are disposed. An exhaust draft path is formed to communicate with indoor side suction port 106, exhaust blade 102, and heat exchange elements105, and to further communicate with outdoor side discharge port 109. An intake draft path is formed to communicate with outdoor side suction port 110, intake blade 103, and heat exchange elements105, and to further communicate with indoor side discharge port 107. Outdoor side discharge port 109 and outdoor side suction port 110 of main body 101 are separated into two layers by means of barrier 111, and each layer communicates with duct connection port 112 provided in main body 101 (see, for example, Unexamined Japanese Patent Publication No. S59-129339).

Such configuration is shown in Fig. 12 and Fig. 13, in which indoor suction air 106a sucked in from indoor side suction port 106 is passed through heat exchange elements 105 by means of exhaust blade 102 to exchange heat, and is exhausted from outdoor side discharge port 109 through exhaust draft path as exhaust air 109a. On the other hand, outdoor suction air 110b sucked in from outdoor side suction port 110 is passed through heat exchange elements 105 by means of intake blade 103 to exchange heat, and is taken in from indoor side discharge port 107 through intake draft path as intake air 107b.

As shown in Fig. 14, louver 108 of main body 101 is installed at ceiling face 121. Duct 123 comes out from the back side of main body 101, and the duct is connected up to outdoor hood 124 connected in the height direction of ceiling back 122.

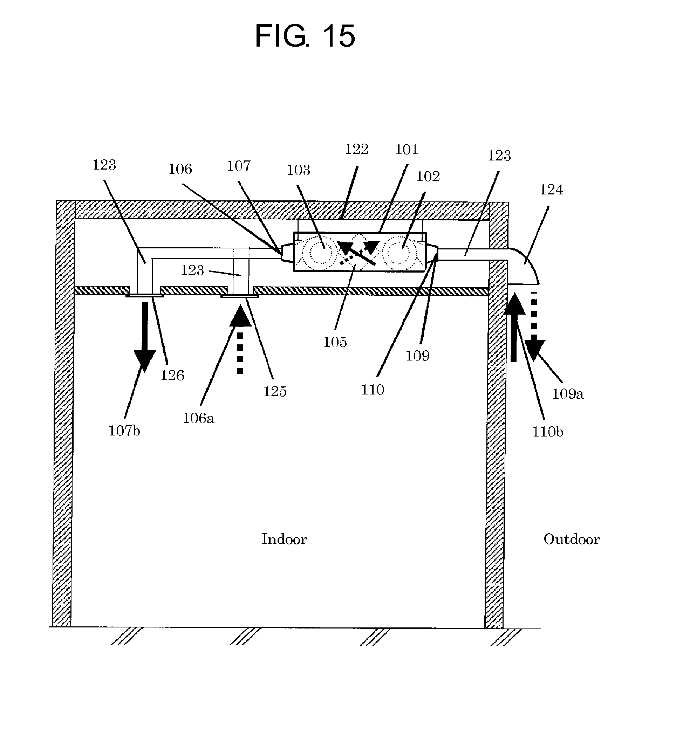

Fig. 15 shows an installation drawing in a second conventional example. It is suspended from the ceiling back. From outdoor hood 124 to outdoor discharge port 109, from outdoor hood 124 to outdoor suction port 110, from indoor side suction port 106 to indoor side suction louver 125, and from indoor side discharge port 107 to indoor side discharge louver 126, the passage communicates through duct connection 123.

In such configuration, an intake passage for supplying outdoor air into indoor, and an exhaust passage for exhausting indoor air to outdoor are formed in a box in independent state. The exhaust passage is provided with an exhaust blower for forming an exhaust flow, and the intake passage is provided with an intake blower for forming an intake flow, and heat exchange elements are disposed to exchange heat continuously between exhaust flow and intake flow. The exhaust blower and intake blower are disposed so that the axial direction of blades may be horizontal, and two blades are arranged in a lateral direction so as to enclose the heat exchange elements (see, for example, Unexamined Japanese Patent Publication No. 2000-257935).

As shown in Fig. 15, from indoor suction louver 125 through duct 123, further, indoor suction air 106a sucked in from indoor side suction port 106 is passed through heat exchange elements 105 by exhaust blade 102 to exchange heat. From outdoor side discharge port 109 through duct 123, exhaust air 109a is exhausted from outdoor hood 124. Outdoor suction air 105b sucked in from outdoor side suction port 110 through duct 123 from outdoor hood 124 is passed through heat exchange elements 105 by intake blade 103 to exchange heat, and intake air is supplied from louver 126 through duct 123 from indoor side discharge port 107.

Recently, in dwelling and non-dwelling buildings, it has been a market trend to extend the distance from floor to ceiling so that the indoor space may appear wider. As a result, it is hard to keep enough space behind the ceiling.

In such circumstance, as shown in the first conventional example, when the wall-mount type heat exchanger is disposed at the ceiling, the heat exchanger can be made compact. However, the duct connection port for external piping must be disposed at the ceiling face of the heat exchanger. Accordingly, in duct connection installation works, sufficient duct pipes cannot be connected in a narrow ceiling back space, and if pipes are connected, it is not easy to install necessary machines and devices.

In the heat exchanger of the second conventional example, a degree of freedom is provided behind the ceiling. Being disposed behind the ceiling, effect of noise can be suppressed. It is also excellent in appearance because the heat exchanger is not visible from inside of the room. The heat exchanger of second conventional example is suited to a ventilation system for exchanging indoor and outdoor intake and exhaust through duct connection. However, the axial direction of blades built in the heat exchanger must be disposed in horizontal direction, and the main body height is determined by the outside diameter of the blades. For intake and exhaust by duct connection, a high pressure is required for rotating the blades, and blades of large outside diameter are needed, and the overall height of the main body is increased. Further, two blades are disposed and arranged in lateral direction so as to enclose the heat exchange elements. As a result, the size of heat exchanger is also increased in the lateral direction. When the overall size of the heat exchanger is increased, the installation work is difficult in a limit space behind the ceiling.

### DISCLOSURE OF THE INVENTION

The present invention is provided to solve the conventional problems, and it is hence an object thereof to present a heat exchanger of thin and compact type that can be installed in a limited space behind the ceiling by connecting the duct connection in lateral direction of the ceiling.

The heat exchanger of the present invention is a heat exchanger for exchanging heat between indoor air and outdoor air by means of a fan motor and a heat exchange element, and connecting outdoor intake and indoor exhaust through duct connection. The heat exchanger includes an indoor suction port for sucking indoor air and an indoor diffuser for blowing out air indoor. At the center of a box-shaped machine body having outdoor suction port for sucking in outdoor air and an outdoor diffuser for exhausting outdoor, an exhaust blade and an intake blade for drafting by rotation are provided at a motor. An exhaust fan casing is provided at the outside of the exhaust blade, and an intake fan casing is provided at the outside of the intake blade. The heat exchange elements are laminated with heat transfer plates held at specified intervals, and a plurality of intake paths and exhaust paths alternately forming mutually independent passages are formed, and the plurality of the heat exchange elements are disposed at the outer periphery of the exhaust fan casing and the intake fan casing, and an intake draft path passing from outdoor suction port through the heat exchange elements and communicating with the indoor diffuser through the intake blade is disposed, and an exhaust draft path passing from indoor suction port through the heat exchange elements and communicating with the outdoor diffuser through the exhaust blade is disposed.

In such configuration, the heat exchange elements are disposed so as to surround the fan casings and blades. If the discharge side of the heat exchange elements, and the exhaust fan casing and the intake fan casing are disposed closely, the air flow rate passing through the plurality of the heat exchange elements can be made uniform. As a result, if the heat exchange elements are small in size, a high heat exchange performance is obtained, and the diameter of exhaust blade and intake blade can be increased. Further, if the blade width is small, a high static pressure is obtained, and the thickness of the machine body can be reduced.

In the heat exchanger of the present invention, the heat exchange elements are disposed at least on two opposite sides of the inner periphery of the machine. As a result, in a limited volume of the machine, the space excluding the volume occupied by the exhaust fan casing and the intake fan casing can be effectively utilized for disposing the heat exchange elements, and the machine body can be reduced in size.

In the heat exchanger of the present invention, one of the heat exchange elements is disposed in space between the outdoor suction port, the exhaust fan casing and the intake fan casing, and the number of layers for laminating heat transfer plates of the heat exchange elements can be increased, and the side space of fan casing can be utilized effectively, and the machine size can be reduced.

In the heat exchanger of the present invention, the distance of axial center of the motor and the motor side surface of the plurality of oppositely disposed the heat exchange elements is uniform. Therefore, the heat exchange elements can be disposed efficiently in a limited volume of machine body, and the machine body is reduced in size.

In the heat exchanger of the present invention, the exhaust blade and intake blade are designed to suck from both sides. Therefore, distribution of air flow passing through the plurality of exhaust paths and intake paths of the heat exchange elements is smooth and uniform, and a high heat exchange performance is obtained. Further, the height direction difference of the exhaust fan casing and outdoor diffuser is decreased, and the pressure loss can be reduced, and the machine thickness is reduced.

In the heat exchanger of the present invention, the distance of suction side of the exhaust fan casing and motor fixing plate, and the distance of suction side of the intake fan casing and motor fixing plate are equal. Therefore, in a limit range of overall height of machine body, the exhaust fan casing and the intake fan casing can be disposed efficiently, and the machine body is reduced in thickness.

In the heat exchanger of the present invention, the distance of suction side of the intake fan casing and motor fixing plate is set longer than and the distance of suction side of the exhaust fan casing and motor fixing plate are equal. Therefore, pressure loss can be adjusted if a difference occurs in the pressure loss of intake draft path and exhaust draft path due to change in size or shape of the louver.

In the heat exchanger of the present invention, two support members are fixed separately to two opposite side faces of the machine body, and motor fixing plates are fixed to the two support members. As a result, the motor is surrounded by the heat exchange elements, exhaust casing and intake casing, and firmly held, and the machine strength is sufficiently assured, and the machine body can be reduced in thickness and weight.

In the heat exchanger of the present invention, two support members and a suspender for hanging the machine in a space behind the ceiling are fixed. The two support members have enough mechanical strength for supporting the heavy weight of the motor when the machine body of the heat exchanger is suspended in a space behind the ceiling. Therefore, the machine body is not required to have excessive mechanical strength for supporting the motor, and hence the machine body can be reduced in weight.

In the heat exchanger of the present invention, the diffuser side of the exhaust fan casing is slightly inclined toward the outdoor diffuser, and a draft path is formed to communicate between the outdoor suction port and the outdoor side upstream of the heat exchange elements located at the outdoor diffuser side. As a result, the air flow rate distribution can be improved when outdoor air flowing in from the outdoor suction port flows toward the outdoor side upstream of the plurality of heat exchange elements. If using the heat exchange elements of small size, a high heat exchange performance is obtained, and the pressure loss in the exhaust draft path can be reduced.

In the heat exchanger of the present invention, and outdoor side air compartment is provided between the outdoor suction port and the heat exchange elements, and an indoor side air compartment is provided between the indoor suction port and the heat exchange elements. The passage area is increased when the outdoor air flowing in from the outdoor suction port flows toward the outdoor side upstream of the plurality of heat exchange elements. At the same time, the passage area is increased when the indoor air flowing in from the indoor suction port flows toward the indoor side upstream of the plurality of heat exchange elements, and hence the pressure loss can be decreased.

In the heat exchanger of the present invention, an indoor side intake air compartment communicating with the indoor diffuser is disposed adjacently to the indoor side air compartment. Therefore, the wind direction can be changed while minimizing the increase of pressure loss in the passage communicating from the indoor side fan casing to the indoor diffuser.

In the heat exchanger of the present invention, an outdoor side partition is provided between the outdoor side upstream of the heat exchange elements and the exhaust side fan casing, and an indoor side partition is provided between the indoor side upstream of the heat exchange elements and the intake side fan casing. It is hence effective to eliminate the problem of suction of outdoor air flowing into outdoor side upstream of the heat exchange elements from the outdoor suction port into the exhaust casing. It is also effective to prevent the outdoor air entering from the indoor suction port and flowing into the indoor side upstream of the heat exchange elements from being sucked into the intake casing. The partitions can be provided without causing effects on the size of the machine body of heat exchanger, and the machine body can be reduced in size.

In the heat exchanger of the present invention, filters are provided in the opposite outdoor side upstream and indoor side upstream of the heat exchange elements. Therefore, a sufficient passage area can be assured in the draft path communicating between the outdoor suction port and outdoor side upstream of the heat exchange elements, and similarly a sufficient passage area can be assured in the draft path communicating between the indoor suction port and indoor side upstream of the heat exchange elements, and pressure loss of filters can be reduced.

In the heat exchanger of the present invention, the filters and the heat exchange elements are disposed tightly to each other by means of elastic materials made of resin or the like. As a result, the filters and the heat exchange elements are disposed tightly to each other without practically closing the upstream side of flow of air through the filters and the downstream side of discharge of air, and the pressure loss can be reduced when the air passes the filters.

The heat exchanger of the present invention has such configuration. Further, for obtaining a compact and integrated structure, the exhaust fan casing is provided outside of the exhaust blade, and the intake fan casing is provided outside of the intake blade. A plurality of heat exchange elements is disposed on the outer periphery of the exhaust fan casing and the intake fan casing. An intake draft path communicating from the outdoor suction port to the indoor diffuser through intake blade by way of the heat exchange elements is provided, and an exhaust draft path communicating from the indoor suction port to outdoor diffuser through exhaust blade by way of the heat exchange elements is provided. In such configuration, the machine body is reduced in size and thickness, and is also reduced in weight and enhanced in static pressure performance.

### BRIEF DESCRIPTION OF THE DRAWINGS

Fig. 1 is a front sectional view of preferred embodiment 1 of the present invention.
Fig. 2 is a bottom sectional view of preferred embodiment 1 of the present invention.
Fig. 3 is a sectional view of a heat exchange element in preferred embodiment 1 of the present invention.
Fig. 4 is a plan sectional view of motor support structure in preferred embodiment 2 of the present invention.
Fig. 5 is a right side sectional view of motor support structure in preferred embodiment 2 of the present invention.
Fig. 6 is an installation drawing of mounting on ceiling in preferred embodiment 2 of the present invention.
Fig. 7 is a front sectional view of preferred embodiment 3 of the present invention.
Fig. 8 is a bottom sectional view of preferred embodiment 3 of the present invention.
Fig. 9 is an installation drawing of mounting on ceiling in preferred embodiment 3 of the present invention.
Fig. 10 is a front sectional view of preferred embodiment 4 of the present invention.
Fig. 11 is a bottom sectional view of preferred embodiment 4 of the present invention.
Fig. 12 is a front sectional view of a first conventional example.
Fig. 13 is an installation drawing of mounting on wall in the first conventional example.
Fig. 14 is an installation drawing of mounting on ceiling of the first conventional example.
Fig. 15 is an installation drawing in a second conventional example.

### Description of the Reference Numerals

- 1: Machine body
- 2: Indoor air
- 3: Indoor suction port
- 4: Indoor diffuser
- 5: Louver
- 6: Outdoor air
- 7: Outdoor suction port
- 8: Outdoor diffuser
- 9: Exhaust blade
- 10: Intake blade
- 11: Motor
- 11a: Surface
- 12: Exhaust fan casing
- 12a: Diffuser
- 13: Intake fan casing
- 14: Motor fixing plate
- 15: Suction side
- 15a: Upstream side
- 15b: Downstream side
- 16: Heat exchange element
- 16a: Outdoor side upstream
- 16b: Indoor side upstream
- 16c: Outdoor side downstream
- 16d: Indoor side downstream
- 17: Outdoor side air compartment
- 18: Indoor side air compartment
- 19: Indoor side intake air compartment
- 20: Draft path
- 21: Indoor side partition
- 22a: Intake draft path
- 22b: Exhaust draft path
- 23: Heat transfer plate
- 24: Intake path
- 25: Exhaust path
- 26: Filter
- 27: Expansion member
- 28: Outdoor side partition
- 30: Outdoor exhaust duct
- 31: Outdoor diffusion hood
- 32: Outdoor suction hood
- 33: Outdoor intake duct
- 34a: Indoor intake louver
- 35: Indoor intake duct
- 37: Side face
- 38: Support member
- 39: Suspender

### DETAILED DESCRIPTION OF THE PREFRRED EMBODIMENTS

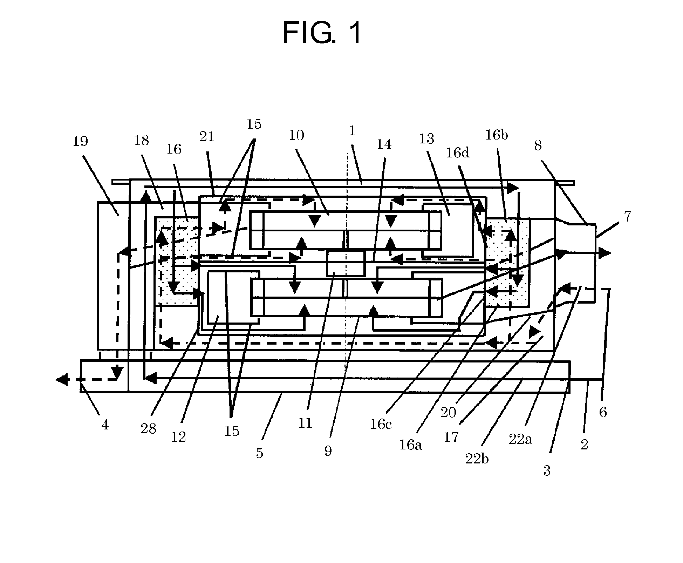

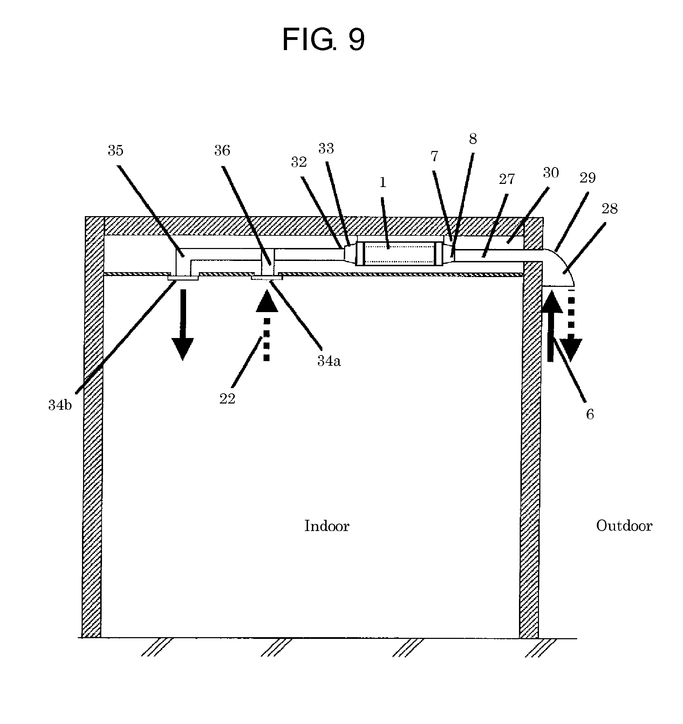

Preferred embodiments of the present invention are described below with reference to Fig. 1 to Fig. 10.

### (Preferred Embodiment 1)

Preferred embodiment 1 is described by reference to Fig. 1 to Fig. 4.

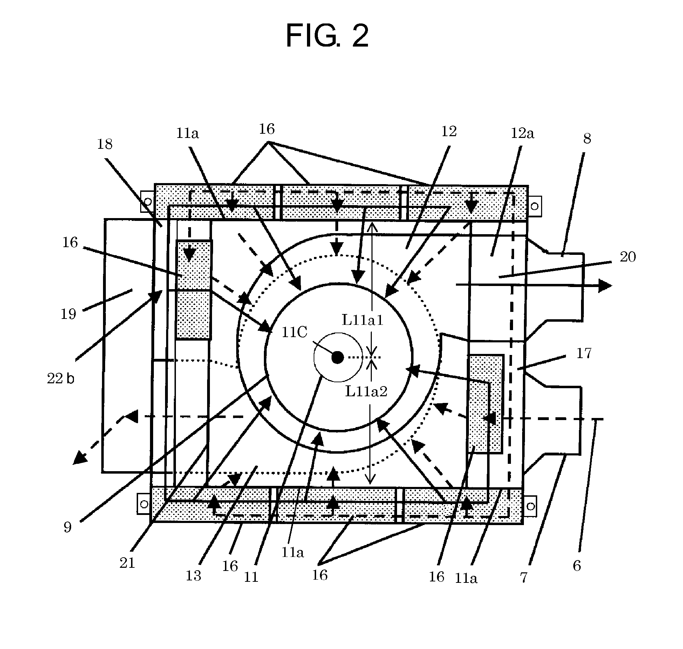

As shown in Fig. 1 and Fig. 2, box-shaped machine body 1 includes louver 5 having indoor suction port 3 for sucking in indoor air 2 and indoor diffuser 4 for blowing out air indoor, outdoor suction port 7 for sucking in outdoor air 6, and outdoor diffuser 8 for blowing out air outdoor. At the center of machine body 1, exhaust blade 9 and intake blade 10 for drafting air by rotation are installed in motor 11.

Motor 11 is disposed at motor fixing plate 14 provided between exhaust fan casing 12 and intake fan casing 13. The distance from suction side 15 of exhaust fan casing 12 to motor fixing plate 14, and the distance from suction side 15 of intake fan casing 13 to motor fixing plate 14 are set to be equal to each other. Exhaust fan casing 12 is provided outside of exhaust blade 9, and intake fan casing 13 is provided outside of intake blade 10. Exhaust blade 9 and intake blade 10 are designed to suck from both sides.

A plurality of heat exchange elements 16 are disposed opposite to motor 11, and on the outer periphery of exhaust fan casing 12 and intake fan casing 13. The distance from surface 11a (see Fig. 2) of plurality of heat exchange elements 16 to central part 11C of motor 11 is each to each other. Outdoor side air compartment 17 is provided between outdoor suction port 7 and heat exchange elements 16. Indoor side air compartment 18 is provided between indoor suction port 3 and heat exchange elements 16. Adjacently to indoor side air compartment 18, indoor side intake air compartment 19 communicating with indoor diffuser 4 is provided, and diffuser section 12a (see Fig. 2) of exhaust fan casing 12 is inclined low toward outdoor diffuser 8. Draft path 20 is formed to communicate between outdoor suction port 7 and outdoor side upstream 16a of heat exchange elements 16 positioned at the side of outdoor diffuser 8.

Outdoor side partition 28 is provided between outdoor side upstream 16a of heat exchange elements 16 and exhaust fan casing 12. Indoor side partition 21 is provided between indoor side upstream 16b of heat exchange elements 16 and intake fan casing 13. Accordingly, intake draft path 22a is formed to communicate from outdoor suction port 7 to indoor diffuser 4 through intake blade 10 from heat exchange elements 16, and exhaust draft path 22b is formed to communicate from indoor suction port 3 to outdoor diffuser 8 through exhaust blade 9 from heat exchange elements 16.

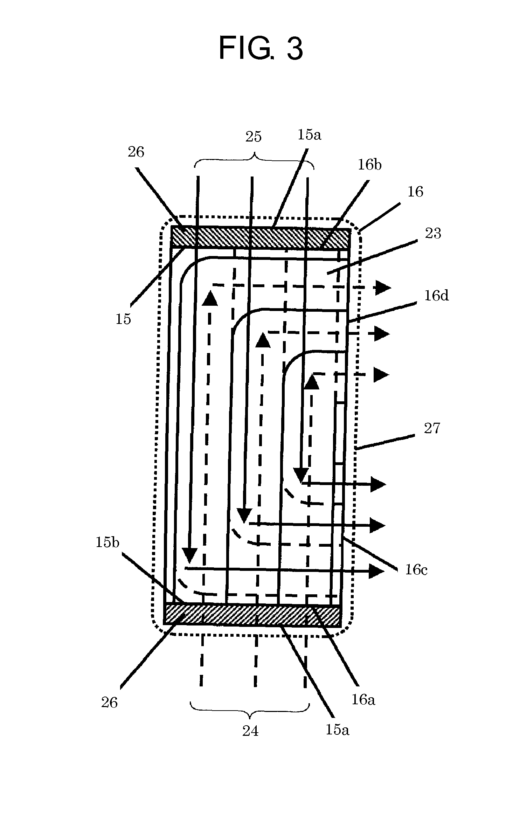

As shown in Fig. 3, heat exchange elements 16 are provided with a plurality of intake paths 24 and exhaust paths 25 alternately forming mutually independent passages, with heat transfer plates 23 held and laminated at specified intervals. Filters 26 made of, for example, resin formed in mesh are provided in outdoor side upstream 16a and indoor side upstream 16b of heat exchange elements 16.

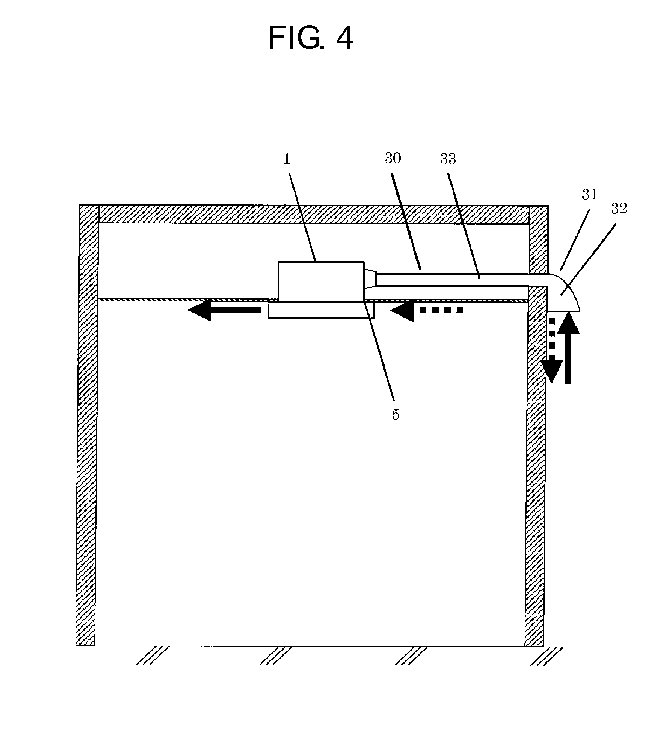

As shown in Fig.1 and Fig. 4, indoor air 2 sucked in from indoor suction port 3 of louver 5 is dispersed through indoor side air compartment 18, and flows into indoor side upstream 16b of plurality of heat exchange elements 16 by way of filters 26. Passing through heat exchange elements 16, indoor air 2 flowing out from outdoor side downstream 16c of heat exchange elements 16 is attracted by exhaust fan casing 12 and exhaust blade 9, and discharged outdoors from outdoor diffusion hood 31 from outdoor diffuser 8 through outdoor exhaust duct 30. On the other hand, outdoor air 6 sucked in from outdoor suction port 7 from outdoor suction hood 32 through outdoor intake duct 33 is dispersed by outdoor side air compartment 17, and flows into outdoor side upstream 16a of plurality of heat exchange elements 16 through filters 26. Outdoor air 6 flowing out from indoor side downstream 16d of heat exchange elements 16 is attracted by intake fan casing 13 and intake blade 10, and is supplied indoor from indoor diffuser 4 of louver 5 through indoor side air compartment 19.

Accordingly, even in a building limited in the space behind the ceiling, the duct connection can be connected in the lateral direction of ceiling, and a thin and compact heat exchanger can be provided. To realize a compact design of heat exchanger, as shown in Fig. 1 and Fig. 2, exhaust fan casing 12, exhaust blade 9, intake fan casing 13, and intake blade 10 suck in air from all around suction plane 15, and heat exchange elements 16 are disposed so as to surround fan casings 12, 13 and blades.

By such configuration, if the distance of the surface formed by outdoor side downstream 16c and indoor side downstream 16d of heat exchange elements 16 and the exhaust fan casing 12 and intake fan casing 13 is closer, the air flow rate passing the plurality of heat exchange elements 16 can be uniform. Hence, in spite of heat exchange elements 16 of small size, a high heat exchange performance can be obtained, and heat exchange elements 16 can be reduced in size, and exhaust blade 9 and intake blade 10 can be increased in diameter. Therefore, if the blade width is small, a high static pressure is obtained, and machine body 1 can be reduced in thickness.

Heat exchange elements 16 can be disposed at least on two opposite sides of inner periphery of machine body 1. Therefore, in a limited volume of machine body 1, heat exchange elements 16 can be disposed efficiently in a space excluding the volume occupied by exhaust fan casing 12 and intake fan casing 13, and machine body 1 can be reduced in size.

One of heat exchange elements 16 is disposed between outdoor suction port 7 and exhaust fan casing 12, and between outdoor suction port 7 and intake fan casing 13. Hence, if the number of layers of laminating heat transfer plates 23 of heat exchange elements 16 is increased, the side space of the fan casing can be utilized effectively, and machine body 1 is reduced in size.

The plurality of heat exchange elements 16 disposed oppositely to motor 11 are made equal in distances L11a and L11a2 from the axial center 11C of motor 11 to surface 11a of motor side, and in a limited machine body volume, heat exchange elements 16 can be disposed efficiently, and machine body 1 is reduced in size.

Exhaust blade 9 and intake blade 10 are designed to suck from both sides, so that distribution of air flow rate passing through the plurality of exhaust paths 25 and intake paths 24 of heat exchange elements 16 is improved. Therefore, a high heat exchange performance is obtained. In addition, by suppressing the difference in height direction of exhaust fan casing 12 and outdoor diffuser 8, the pressure loss is reduced, and machine body 1 is reduced in thickness.

The distance from suction side 15 of exhaust fan casing 12 to motor fixing plate 14, and the distance from suction side 15 of intake fan casing 13 to motor fixing plate 14 are made equal, and exhaust fan casing 12 and intake fan casing 13 can be efficiently disposed in a limited space of machine body, and machine body 1 is reduced in thickness.

Diffusion section 12a of exhaust fan casing 12 is inclined low toward outdoor diffuser 8, and passage 20 is formed to communicate between outdoor suction port 7 and outdoor side upstream 16a of heat exchange elements 16 positioned at outdoor diffuser8 side. It is therefore effective to improve the air flow distribution of outdoor air flowing in from outdoor suction port 7 flowing toward outdoor side upstream 16a of plurality of heat exchange elements 16. Hence, if heat exchange elements 16 are reduced in size, a high heat exchange performance is obtained, and the pressure loss of exhaust draft path 22b can be reduced.

Outdoor side air compartment 17 is provided between outdoor suction port 7 and heat exchange elements 16, and indoor side air compartment 19 is provided between indoor suction port 3 and heat exchange elements 16. As a result, the passage area can be increased when outdoor air 6 flowing in from outdoor suction port 7 flows toward outdoor side upstream 16a of plurality of heat exchange elements 16. Besides, the passage area can be increased when the indoor air flowing in from indoor suction port 3 flows toward indoor side upstream 16b of plurality of heat exchange elements 16, and the pressure loss can be decreased.

Adjacently to indoor side air compartment 19, indoor side intake air compartment 19 communicating with indoor diffuser 4 is provided. In the passage communicating from exhaust fan casing 13 to indoor diffuser 4, increase of pressure loss is kept to a minimum while the wind direction can be changed.

Outdoor side partition 28 is provided between outdoor side upstream 16a of heat exchange elements 16 and exhaust fan casing 12. Indoor side partition 21 is provided between indoor side upstream 16b of heat exchange elements 16 and intake fan casing 13. Accordingly, outdoor air 6 entering from outdoor suction port 7 and flowing into outdoor side upstream 16a of heat exchange elements 16 is prevented from being sucked into exhaust casing 14. Similarly, indoor air 2 entering from indoor suction port 3 and flowing into indoor side upstream 16b of heat exchange elements 16 is prevented from being sucked into intake casing 15. Since indoor side partition 21 can be provided without giving effects to the size of machine body 1, and machine body 1 can be reduced in size. If a difference occurs in the pressure loss between intake draft path 22a and exhaust draft path 22b due to size or shape of louver 5, the pressure loss can be adjusted by adjusting the position or shape of indoor side partition 21 or outdoor side partition 28.

Filters 26 are provided in opposite outdoor side upstream 16a and indoor side upstream 16b of heat exchange elements 16. The passage area can be maintained in the draft path communicating from outdoor suction port 7 to outdoor side upstream 16a of heat exchange elements 16, and the passage area can be maintained in the draft path communicating from indoor suction port 3 to indoor side upstream 16b of heat exchange elements 16, so that pressure loss of filters 26 can be reduced.

Filters 26 and heat exchange elements 16 are disposed closely to each other by means of elastic material 27 of resin mesh or the like. Filters 26 and heat exchange elements 16 are close and tight mutually without practically closing the passage of air of filers 26 flowing in on upstream 15a and flowing out on downstream 15b (see Fig. 3), and pressure loss when the air passes the filers can be decreased. Generally, while the heat exchanger is stopped, a gap may be formed between heat exchange elements and filers, but heat exchange elements 16 and filers 26 are close to each other if the heat exchanger is stopped. For example, a tiny insect existing in outdoor air 6 is prevented from invading into room through gap in but heat exchange elements 16 and filers 26,

In preferred embodiment 1, the distance from suction side 15 of exhaust fan casing 12 to motor fixing plate 14, and the distance from suction side 15 of intake fan casing 13 to motor fixing plate 14 are equal to each other. However, the distance from suction side 15 of intake fan casing 13 to motor fixing plate 14 may be set longer than the distance from suction side 15 of exhaust fan casing 12 to motor fixing plate 14. As a result, if a difference occurs in the pressure loss between intake draft path 22a and exhaust draft path 22b due to size or shape of louver 5, the pressure loss can be adjusted by adjusting the distance of suction side 15 of intake fan casing 13 and motor fixing plate 14.

### (Preferred Embodiment 2)

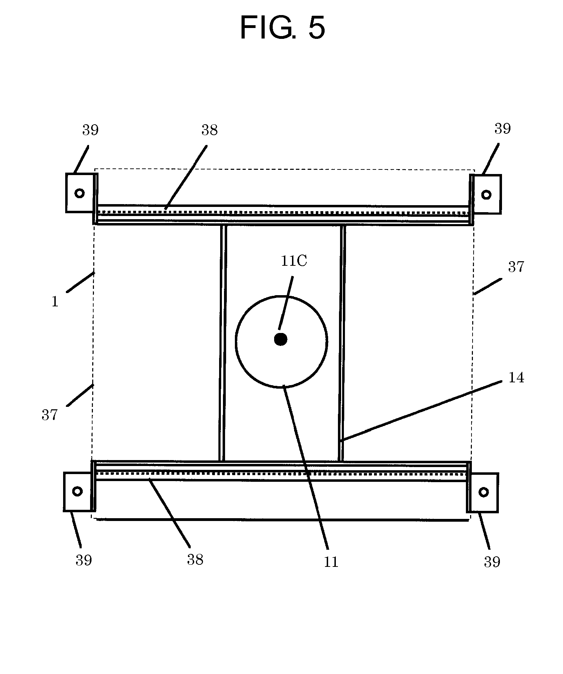

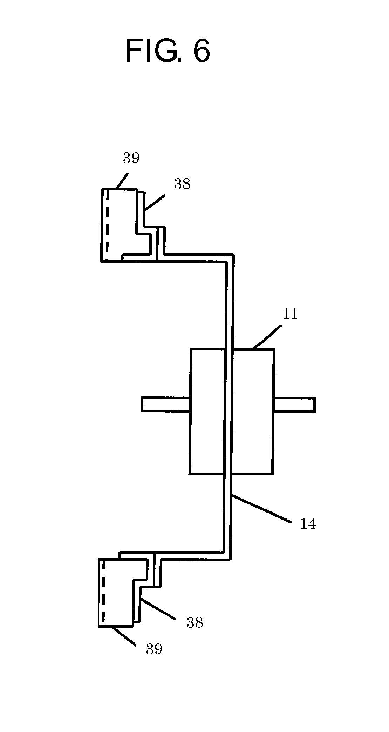

Fig. 5 is a side sectional view of support structure of motor, and Fig. 6 shows a mounting state of motor on ceiling. In Fig. 5 and Fig. 6, same parts as in Fig. 1 to Fig. 4 are identified with same reference numerals. As shown in Fig. 5 and Fig. 6, two support members 38 are fixed to two opposite side faces 37 of machine body 1, motor fixing plates 14 are fixed to two support members 38, and motor 11 is fixed on motor fixing plates 14. Two suspenders 39 are fixed by each one of two support members 38.

In this configuration, the weight of motor 11 is supported by a total of four suspenders 39 by way of motor fixing plates 14 and two support members 38.

Hence, when machine body 1 is suspended, the weight of heavy motor 11 can be sufficiently supported by suspenders 38. Therefore, machine body 1 of wide surface area is not required to have excessive strength, and hence it can be reduced in weight.

### (Preferred Embodiment 3)

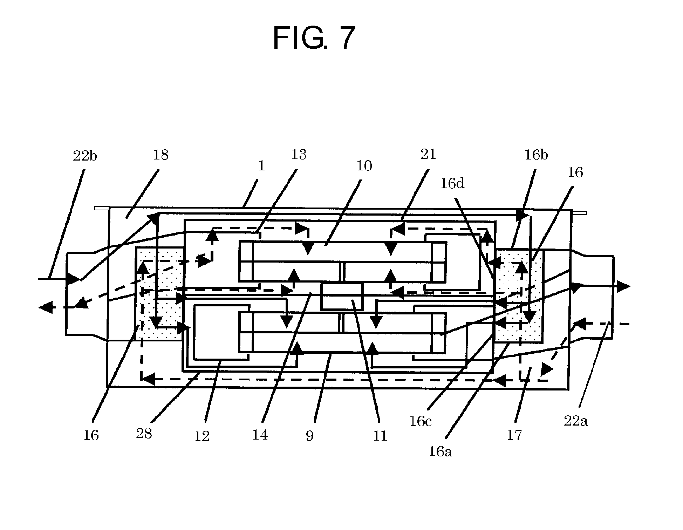

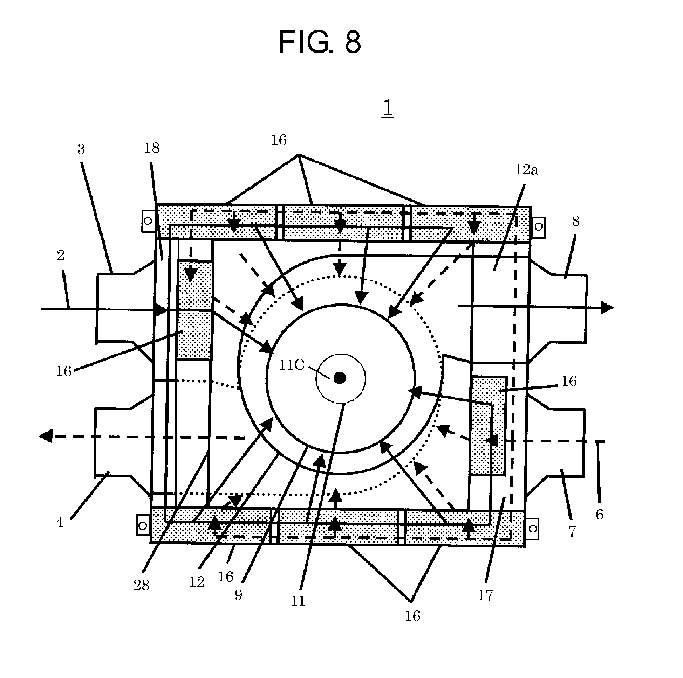

Preferred embodiment 3 is described by referring to Fig. 7 and Fig. 8. Fig. 7 is a front sectional view of heat exchanger, and Fig. 8 is a bottom sectional view. In Fig. 7 and Fig. 8, same parts as in Fig. 1 to Fig. 6 are identified with same reference numerals.

In preferred embodiment 3, indoor intake and exhaust are exchanged through duct from the main body, while indoor intake and exhaust are exchanged directly in preferred embodiment 1.

As shown in Fig. 7 and Fig. 8, the side face of box-shaped machine body 1 is provided with indoor suction port 3 for sucking indoor air 2, indoor diffuser 4 for blowing out air indoor, outdoor suction port 7 for sucking in outdoor air 6, and outdoor diffuser 8 for blowing out air outdoor. In the center of machine body 1, exhaust blade 9 and intake blade 10 for drafting by rotation is installed in motor 11. Motor 11 is disposed at motor fixing plates 14, and exhaust fan casing 12 is provided outside of exhaust blade 9, and intake fan casing 13 is provide outside of intake blade 10.

Distances L11a1 and L11a2 from surface 11a of heat exchange elements 16 disposed on at least two sides facing motor 11 to center 11C of motor 11 are equal to each other. Exhaust blade 9 and intake blade 10 are designed to suck from both sides. Besides, heat exchange elements 16 are provided with a plurality of intake paths 24 and exhaust paths 25 alternately forming mutually independent passages, with heat transfer plates 23 held and laminated at specified intervals as shown in Fig. 3. Such heat exchange elements 16 are disposed at the outer periphery of exhaust fan casing 12 and intake fan casing 13. Outdoor side air compartment 17 is provided between outdoor suction port 7 and heat exchange elements 16, and indoor side air compartment 18 is provided between indoor suction port 3 and heat exchange elements 16. Outdoor side partition 28 is provided between outdoor side upstream 16a of heat exchange elements 16 and exhaust fan casing 12. Indoor side partition 21 is provided between indoor side upstream 16b of heat exchange elements 16 and intake fan casing 13. Intake draft path 22a is formed to communicate from outdoor suction port 7 to indoor diffuser 4 through intake blade 10 from heat exchange elements 16, and exhaust draft path 22b is formed to communicate from indoor suction port 3 to outdoor diffuser 8 through exhaust blade 9 from heat exchange elements 16.

Indoor air 2 sucked in from indoor exhaust louver 34a enters indoor suction port 3 through indoor exhaust duct 36, and is dispersed through indoor side air compartment 18, and flows into indoor side upstream 16b of plurality of heat exchange elements 16 by way of filters 26. Passing through heat exchange elements 16, indoor air 2 flowing out from outdoor side downstream 16c of heat exchange elements 16 is attracted by exhaust fan casing 12 and exhaust blade 9, and discharged outdoor from outdoor diffusion hood 31 from outdoor diffuser 8 through outdoor exhaust duct 30. On the other hand, outdoor air 6 sucked in from outdoor suction port 7 from outdoor suction hood 32 (see Fig. 4) through outdoor intake duct 33 (see Fig. 4) is dispersed by outdoor side air compartment 17, and flows into outdoor side upstream 16a of plurality of heat exchange elements 16 through filters 26. Outdoor air 6 flowing out from indoor side downstream 16d of heat exchange elements 16 is attracted by intake fan casing 13 and intake blade 10, and is supplied indoor from indoor diffuser 4 by way of indoor intake duct 35 and through indoor intake louver 34a.

Accordingly, even in a building limited in the space behind the ceiling, the duct connection can be connected in the lateral direction of ceiling, and a thin and compact heat exchanger can be provided.

To realize a compact design of heat exchanger, as shown in Fig. 7 and Fig. 8, heat exchange elements 16 are disposed so as to surround exhaust fan casing 12, exhaust blade 9, intake fan casing 13, and intake blade 10.

By such configuration, if the distance of the surface formed by outdoor side downstream 16c and indoor side downstream 16d of heat exchange elements 16 and the exhaust fan casing 12 and intake fan casing 13 is closer, the air flow rate passing the plurality of heat exchange elements 16 may be uniform. Hence, in spite of heat exchange elements 16 of small size, a high heat exchange performance is obtained. Since heat exchange elements 16 can be reduced in size, exhaust blade 9 and intake blade 10 can be increased in diameter. Therefore, even when the blade width is small, a high static pressure can be obtained, so that machine body 1 can be reduced in thickness.

### (Preferred Embodiment 4)

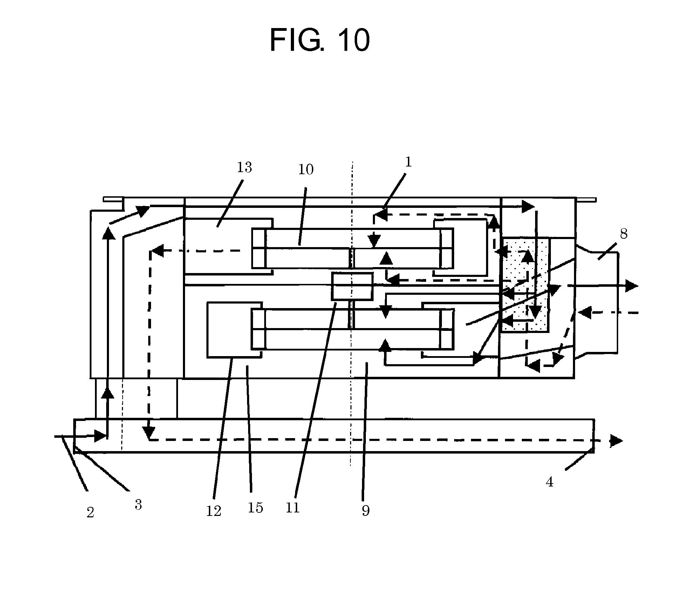

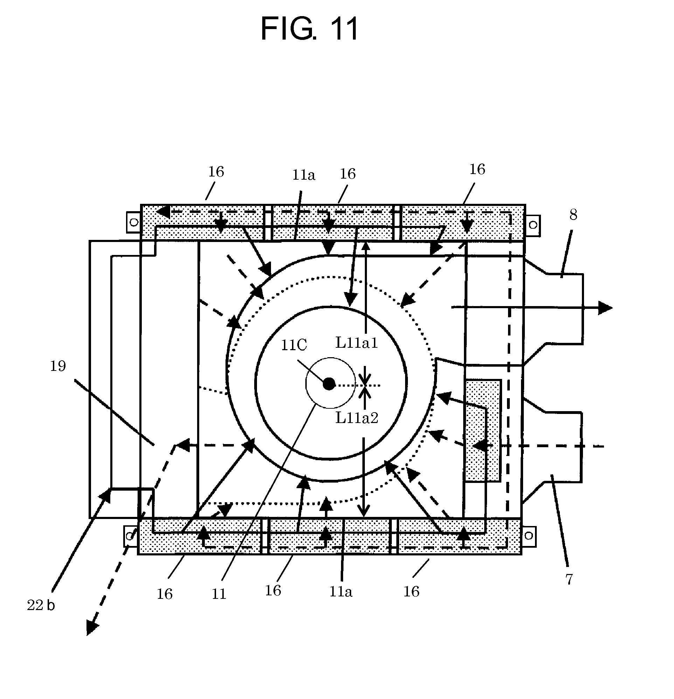

Preferred embodiment 4 is described by referring to Fig. 10 and Fig. 11, and is similar to preferred embodiment 1, except that the position of indoor suction port 3 and indoor diffuser 4 is changed, and that heat exchange elements 16 are removed from between indoor suction port 3, exhaust fan casing 12, and intake fan casing 13. Same parts as in Fig. 1 to Fig. 9 are identified with same reference numerals. Distances L11a1 and L11a2 from surface 11a of heat exchange elements 16 disposed on at least two sides facing motor 11 to center 11C of motor 11 are set to be equal to each other.

Preferred embodiment 4 has the same effect and action as in preferred embodiments 1 to 3.

### INDUSTRIAL APPLICABILITY

The heat exchanger of the present invention is capable of reducing the pressure loss in the machine while keeping the machine at low overall height, and enhancing the static pressure performance, and is hence very useful as heat exchanger for recent dwelling and non-dwelling building limited in the space behind the ceiling.

## Claims

1. A heat exchanger for exchanging heat between indoor air and outdoor air by means of a fan motor and a heat exchange element, and connecting outdoor intake and indoor exhaust through duct connection, comprising:
a machine body;
an indoor suction port provided at the machine body for sucking the indoor air;
an indoor diffuser provided at the machine body for blowing out air indoors;
an outdoor suction port for sucking in the outdoor air;
an outdoor diffuser for blowing out outdoor;
a motor provided inside the machine body;
an exhaust blade and an intake blade disposed at the motor;
an exhaust fan casing provided around the exhaust blade;
an intake fan casing provided around the intake blade; and
the plurality of heat exchange elements disposed around the exhaust fan casing and the intake fan casing,
wherein the heat exchange elements are laminated with heat transfer plates held at specified intervals,
a plurality of intake paths and exhaust paths alternately forming mutually independent passages are formed,
the heat exchange elements are disposed at the outer periphery of the exhaust fan casing and the intake fan casing,
an intake draft path passing from the outdoor suction port through the heat exchange elements and communicating with the indoor diffuser through the intake blade is formed, and
an exhaust draft path passing from indoor suction port through the heat exchange elements and communicating with the outdoor diffuser through the exhaust blade is formed.

2. The heat exchanger of claim 1, wherein the plurality of heat exchange elements are disposed at least on two opposite sides of the inner periphery of the machine body.

3. The heat exchanger of claim 1 or 2, wherein one of the heat exchange elements is disposed between the outdoor suction port and the exhaust fan casing, and between the outdoor suction port and the intake fan casing.

4. The heat exchanger of claim 1, wherein the distances of an axial center of the motor and a side surface of the motor of the plurality of heat exchange elements disposed facing to the motor are equal.

5. The heat exchanger of claim 1, wherein the exhaust blade and intake blade are designed to suck from both sides.

6. The heat exchanger of claim 1, wherein a motor fixing plate is provided between the exhaust fan casing and the intake fan casing, and a distance between a side of suction of the exhaust fan casing and the motor fixing plate, and a distance between a side of suction of the intake fan casing and the motor fixing plate are equal.

7. The heat exchanger of claim 1, wherein a motor fixing plate is provided between the exhaust fan casing and the intake fan casing, and a distance between a side of suction of the intake fan casing and the motor fixing plate is set longer than a distance between a side of suction of the exhaust fan casing and the motor fixing plate.

8. The heat exchanger of claim 6 or 7, wherein a plurality of support members are fixed separately to two opposite side faces of the machine body, and the motor fixing plates are fixed to the plurality of support members.

9. The heat exchanger of claim 6 or 7, wherein suspenders are fixed for hanging the machine body in the space behind a ceiling and the plurality of support members.

10. The heat exchanger of any one of claims 1, 2, 4, 5, 6 and 7, wherein a side of the diffuser of the exhaust fan casing is inclined low toward the outdoor diffuser, and a draft path is formed to communicate between the outdoor suction port and an outdoor side upstream of the heat exchange elements located at a side of the outdoor diffuser.

11. The heat exchanger of claim 1, wherein an outdoor side air compartment is provided between the outdoor suction port and the heat exchange elements, and an indoor side air compartment is provided between the indoor suction port and the heat exchange elements.

12. The heat exchanger of claim 11, wherein an indoor side intake air compartment communicating with the indoor diffuser is disposed adjacently to the indoor side air compartment.

13. The heat exchanger of claim 1, wherein an outdoor side partition is provided between the outdoor side upstream of the heat exchange elements and the exhaust side fan casing, and an indoor side partition is provided between the indoor side upstream of the heat exchange elements and the intake side fan casing.

14. The heat exchanger of claim 1, wherein filters are provided at the outdoor side upstream and the indoor side upstream facing the heat exchange elements.

15. The heat exchanger of claim 14, wherein the filter and the heat exchange element are disposed tightly to each other by means of elastic material.
